# EUROPEAN PATENT APPLICATION

(11) **EP 4 535 322 A1**
(43) Date of publication of application: **09.04.2025**
(21) Application number: 23816402.4
(22) Date of filing: 02.06.2023
(51) Int. Cl.: G08B 13/16, G08B 17/00, G08B 21/12, G10L 25/15

(54) **SPACE MONITORING SYSTEM AND SPACE MONITORING METHOD USING ACOUSTIC SIGNAL**

(30) Priority: 02.06.2022 KR 20220067705
(71) Applicant: Kim, Jae Whan, Seoul 06644 (KR)
(72) Inventor: Kim, Jae Whan, Seoul 06644 (KR)
(74) Representative: Mammel und Maser Patentanwälte PartG mbB
(86) International application number: PCT/KR2023/007616
(87) International publication number: WO 2023/234742

(57) **Abstract**

The present invention relates to a space monitoring system and space monitoring method using an acoustic signal. The present invention presents technology for creating a database by organizing frequency responses in a monitored space and related data so that a situation in the space can be determined easily, rapidly, and accurately, and technology for monitoring the space using same.

## Description

### [Technical Field]

The present disclosure relates to a space monitoring system and a space monitoring method using an acoustic signal. The present disclosure proposes technology for constructing a database by organizing the frequency response and related data of a space to be monitored so as to easily, quickly, and accurately determine the situation of the space and technology for performing space monitoring using the same.

### [Background Art]

The frequency response of a space is a measurement of the frequency-specific intensity or phase of sound by emitting sound of different frequencies using a speaker or the like in the space and receiving the sound using a microphone or the like. If the measured frequency response of the space is expressed as a graph, the X axis is the frequency and the Y axis is the intensity or phase of the sound. If there is movement, temperature change, gas leakage, etc. in the space to be monitored, the measured frequency response of the space becomes different from a reference frequency response. Technology for detecting various situations, such as intrusion, fire, and gas leakage, in the space to be monitored by measuring the frequency response of the space has been proposed.

Conventionally, a synthesized sound of multiple frequencies is emitted, the emitted sound is received, and the frequency-specific sound pressure of the received sound is compared with a specific reference value to determine whether an abnormal change has occurred in a space to be monitored. However, in order for this situation determination to be accurate, the "reference value" must accurately reflect a normal state of the space to be monitored. However, since the normal state of the space to be monitored frequently changes, it is difficult to set the reference value so as to match the variable normal state of the space to be monitored.

Furthermore, determining the space situation using measured frequency-specific sound pressure information requires a high level of skill, and it takes a considerable amount of time to interpret the data. In particular, if there is noise in the measured frequency-specific sound pressure information, the above-mentioned problems are greatly magnified, and the reliability of the determination made through data interpretation is greatly reduced.

In addition, conventionally, when measured acoustic signals or frequency-specific sound pressure information is cumulatively stored, the amount of stored data becomes huge.

### [Disclosure]

### [Technical Problem]

The present disclosure has been made in view of the above problems, and it is an object of the present disclosure to provide a method of constructing a database such that situation determination can be easily, quickly, and accurately made in a space monitoring system using an acoustic signal.

According to the present disclosure, it is possible to significantly remedy a problem caused by a reference value as a comparison target not accurately reflecting a normal state of a space to be monitored, a problem that it is difficult to quickly and accurately interpret measured data, a problem that the reliability of data analysis results is lowered in noisy environments, and a problem that the accumulated amount of measured data is increased.

Objects of the present disclosure are not limited to the aforementioned object, and other unmentioned objects and advantages of the present disclosure will be understood from the following description.

### [Technical Solution]

An embodiment of a space monitoring method according to the present disclosure includes a measured value information generation step of generating measured value information about the frequency response of a space measured at a specific point in time or over a specific time interval and a measured value information storage step of storing the measured value information in a database in a state of being matched with the specific point in time or the specific time interval, wherein the measured value information generation step and the measured value information storage step are repeatedly performed over time to construct the database.

The space monitoring method may further include a measured value reliability evaluation information generation step of evaluating reliability of the measured value information to generate measured value reliability evaluation information, wherein the measured value information storage step may include storing the measured value information and the measured value reliability evaluation information in a state of being matched with the specific point in time or the specific time interval.

The space monitoring method may further include a comparative value information generation step of comparing the measured value information at the specific point in time or over the specific time interval with measured value information at one or more other points in time or over one or more other time intervals to generate comparative value information and a comparative value information storage step of storing the comparative value information in the database in a state of being matched with the specific point in time and the other points in time compared therewith or the specific time interval and the other time intervals compared therewith, wherein the comparative value information generation step and the comparative value information storage step may be repeatedly performed to construct the database.

The space monitoring method may further include a comparative value information generation step of comparing the measured value information at the specific point in time or over the specific time interval with measured value information at one or more other points in time or over one or more other time intervals to generate comparative value information, a comparative value reliability evaluation information generation step of evaluating reliability of the comparative value information based on measured value reliability evaluation information for each piece of measured value information corresponding to the comparative value information to generate comparative value reliability evaluation information, and a comparative value information storage step of storing the comparative value information and the comparative value reliability evaluation information in the database in a state of being matched with the specific point in time and the other points in time compared therewith or the specific time interval and the other time intervals compared therewith, wherein the comparative value information generation step to the comparative value information storage step may be repeatedly performed to construct the database.

As an example, the measured value information generation step to the measured value information storage step and the comparative value information generation step to the comparative value information storage step may be independently and repeatedly performed to construct the database.

As an example, the measured value reliability evaluation information generation step may include evaluating at least one of noise, measurement stability, spectral variability, and frequency resolution adequacy for the measured value information to generate measured value reliability evaluation information for the measured value information.

As an example, the comparative value information storage step may include matching the comparative value information in a coordinate table constituted by the specific point in time and the other points in time compared therewith or the specific time interval and the other time intervals compared therewith to generate a multidimensional data table and storing the multidimensional data table in the database.

The space monitoring method may further include a multidimensional data table storage step of matching a plurality of pieces of comparative value information in a coordinate table constituted by the specific point in time and the other points in time compared therewith or the specific time interval and the other time intervals compared therewith to generate a multidimensional data table and storing the multidimensional data table in the database.

As an example, the comparative value information storage step may include matching the comparative value information and the comparative value reliability evaluation information in a coordinate table constituted by the specific point in time and the other points in time compared therewith or the specific time interval and the other time intervals compared therewith to generate a multidimensional data table and storing the multidimensional data table in the database.

The space monitoring method may further include a multidimensional data table storage step of matching a plurality of pieces of comparative value information and a plurality of pieces of comparative value reliability evaluation information in a coordinate table constituted by the specific point in time and the other points in time compared therewith or the specific time interval and the other time intervals compared therewith to generate a multidimensional data table and storing the multidimensional data table in the database.

The space monitoring method may further include a space situation information provision step of providing a multidimensional data table generated based on the comparative value information to a user.

The space monitoring method may further include a space situation information provision step of providing a multidimensional data table generated based on the comparative value information and the comparative value reliability evaluation information to the user.

In addition, an embodiment of a space monitoring system according to the present disclosure includes an information generation means configured to generate measured value information about the frequency response of a space measured at a specific point in time or over a specific time interval and a database construction means configured to organize and store the measured value information in a state of being matched with the specific point in time or the specific time interval.

The information generation means may evaluate reliability of the measured value information to further generate measured value reliability evaluation information, and the database construction means may store the measured value information and the measured value reliability evaluation information in a state of being matched with the specific point in time or the specific time interval.

The information generation means may compare the measured value information at the specific point in time or over the specific time interval with measured value information at one or more other points in time or over one or more other time intervals to generate comparative value information, and the database construction means may further store the comparative value information in a state of being matched with the specific point in time and the other points in time compared therewith or the specific time interval and the other time intervals compared therewith.

As an example, the information generation means may compare the measured value information at the specific point in time or over the specific time interval with measured value information at one or more other points in time or over one or more other time intervals to further generate comparative value information and may evaluate reliability of the comparative value information based on measured value reliability evaluation information for each piece of measured value information corresponding to the comparative value information to further generate comparative value reliability evaluation information, and the database construction means may further store the comparative value information and the comparative value reliability evaluation information in a state of being matched with the specific point in time and the other points in time compared therewith or the specific time interval and the other time intervals compared therewith.

As an example, the database construction means may match the comparative value information in a coordinate table constituted by the specific point in time and the other points in time compared therewith or the specific time interval and the other time intervals compared therewith to generate a multidimensional data table and may store the multidimensional data table in a database.

As an example, the database construction means matches the comparative value information and the comparative value reliability evaluation information in a coordinate table constituted by the specific point in time and the other points in time compared therewith or the specific time interval and the other time intervals compared therewith to generate a multidimensional data table and may store the multidimensional data table in a database.

The space monitoring system may further include a space situation determination means configured to provide a multidimensional data table generated based on the comparative value information to a user or to provide a multidimensional data table generated based on the comparative value information and the comparative value reliability evaluation information to the user.

### [Advantageous Effects]

Conventionally, it is necessary to set appropriate reference value information as a target to be compared with measured information. In the present disclosure, however, pieces of measured information are compared with each other, and therefore it is unnecessary to separately set the reference value information and it is possible to grasp the situation of a space more accurately than when the reference value information is set.

Furthermore, reliability evaluation information for measured value information or reliability evaluation information for comparative value information is stored in a database, and therefore it is possible to ensure accuracy and reliability in determining the situation of a space to be monitored.

Moreover, according to the present disclosure, a multidimensional data table for the comparative value information is provided to an administrator or a user as visual information, and therefore the administrator or the user may immediately recognize the situation occurring in the target space without difficulty.

In addition, comparative value information acquired by comparing measured value information at a specific point in time with measured value information at another point in time is sequentially organized and stored in chronological order, and therefore it is possible to construct a database while significantly reducing the amount of stored data.

The effects of the present disclosure are not limited to the aforementioned effects, and other unmentioned effects will be clearly understood by a person having ordinary skill in the art to which the present disclosure pertains from the following description.

### [Description of Drawings]

FIG. 1 is a block diagram of an embodiment of a space monitoring system according to the present disclosure.
FIG. 2 is a block diagram of an embodiment of an information generation means of the space monitoring system according to the present disclosure.
FIG. 3 is a block diagram of an embodiment of a database construction means of the space monitoring system according to the present disclosure.
FIG. 4 is a block diagram of an embodiment of a space situation determination means of the space monitoring system according to the present disclosure.
FIG. 5 is a flowchart of an embodiment of a database construction process of a space monitoring method according to the present disclosure.
FIG. 6 is a view showing an embodiment of maintaining a database in the database construction process of the space monitoring method according to the present disclosure.
FIG. 7 is a flowchart of an embodiment of evaluating the reliability of measured value information in the database construction process of the space monitoring method according to the present disclosure.
FIG. 8 is a view showing an embodiment of a "noise" evaluation, which is one of the measured value reliability evaluations for the measured value information, in the database construction process of the space monitoring method according to the present disclosure.
FIGs. 9 and 10 are views showing an embodiment of a "measurement stability" evaluation, which is one of the measured value reliability evaluations for the measured value information, in the database construction process according to the present disclosure.
FIGs. 11 and 12 are views showing an embodiment of a "spectral variability" evaluation, which is one of the measured value reliability evaluations for the measured value information, in the database construction process according to the present disclosure.
FIGs. 13 and 14 are views showing an embodiment of a "frequency resolution adequacy" evaluation, which is one of the measured value reliability evaluations for the measured value information, in the database construction process according to the present disclosure.
FIG. 15 is a flowchart of another embodiment of the database construction process of the space monitoring method according to the present disclosure.
FIGs. 16 to 21 are views showing an embodiment of a visual representation of various situation-specific multidimensional data tables generated through the database construction process of the space monitoring method according to the present disclosure.
FIG. 22 is a flowchart of a further embodiment of the database construction process of the space monitoring method according to the present disclosure.
FIGs. 23 and 24 are views showing an example of a visual representation of a multidimensional data table generated by reflecting comparative value reliability evaluation information through the database construction process of the space monitoring method according to the present disclosure.
FIG. 25 is a flowchart of an embodiment of the space situation determination process of the space monitoring method according to the present disclosure.

### [Best Mode]

Hereinafter, preferred embodiments of the present disclosure will be described in detail with reference to the accompanying drawings, but the present disclosure is not limited or restricted by the embodiments.

In order to describe the present disclosure, operational advantages of the present disclosure, and objects achieved by practicing the present disclosure, preferred embodiments of the present disclosure will hereinafter be illustrated and a description will be given with reference thereto.

First, it should be noted that the terminology used in the present application is used only to describe specific embodiments and is not intended to limit the present disclosure, and singular forms are intended to include plural forms unless mentioned otherwise. It should also be understood that in the present application, the terms "including" or "having" and the like are intended to designate the presence of the features, numbers, steps, operations, components, parts, or combinations thereof described in the specification, and not to preclude the possibility of the presence or addition of one or more other features, numbers, steps, operations, components, parts, or combinations thereof.

In describing the present disclosure, a detailed description of known configurations or functions incorporated herein will be omitted when the same may obscure the subject matter of the present disclosure.

The present disclosure proposes a method of constructing a database of information related to the frequency response of a space to be monitored such that the situation of the space can be easily, quickly, and accurately determined and a technology for performing space monitoring using the same.

In the present disclosure, the expression "constructing a database" is used in a sense including not only organizing and storing information in a permanent storage medium such as a hard disk but also storing information in a temporary storage medium such as a buffer.

The present disclosure relates to a space monitoring system and a space monitoring method using an acoustic signal. First, a space monitoring system according to the present disclosure will be described.

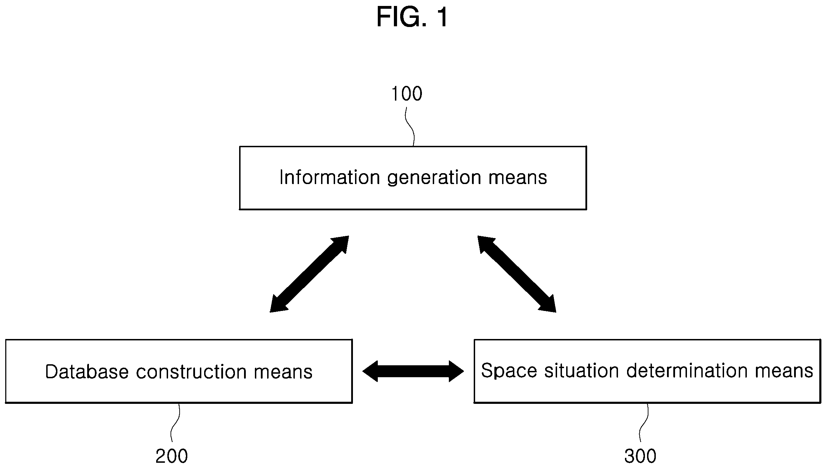

FIG. 1 is a block diagram of an embodiment of a space monitoring system according to the present disclosure.

The space monitoring system may include an information generation means 100, a database construction means 200, and a space situation determination means 300. The information generation means 100, the database construction means 200, and the space situation determination means 300 may be configured as one apparatus and disposed at the same location, or may be configured as different apparatuses and disposed at different locations in a state of being spaced apart from each other.

The information generation means 100 may measure the frequency response of a target space at a specific point in time or over a specific time interval in the space, and may generate measured value information therefor. Furthermore, the information generation means 100 may generate comparative value information by comparing a plurality of pieces of measured value information. In addition, the information generation means 100 may evaluate the reliability of the measured value information to generate measured value reliability evaluation information, and may evaluate the reliability of the comparative value information to generate comparative value reliability evaluation information.

The database construction means 200 may organize, process, and cumulatively store various data generated by the information generation means 100 to construct a database for determining the space situation of the target space.

As an example, the database construction means 200 may receive the measured value information from the information generation means 100, and may organize and store the measured value information in chronological order. In addition, the database construction means 200 may receive the comparative value information from the information generation means 100, and may generate and store a multidimensional data table based thereon. In addition, the database construction means 200 may generate and store a higher-dimensional data table by reflecting the comparative value reliability evaluation information in the comparative value information.

The space situation determination means 300 may determine the situation of the target space based on the frequency response of the space measured by the information generation means 100. At this time, the space situation determination means 300 may utilize the database constructed by the database construction means 200 to instantly determine the space situation within a shorter time.

Furthermore, the space situation determination means 300 may provide the multidimensional data table stored in the database construction means 200 in a visual form such that an administrator or a user can more easily grasp the situation of the target space.

That is, the space situation determination means 300 may provide the visual multidimensional data table corresponding thereto along with situation determination information for the target space determined through the system, thereby eliminating errors in determining the situation of the target space and further improving situation determination reliability.

Components of the space monitoring system according to the present disclosure will now be described in more detail with reference to embodiments.

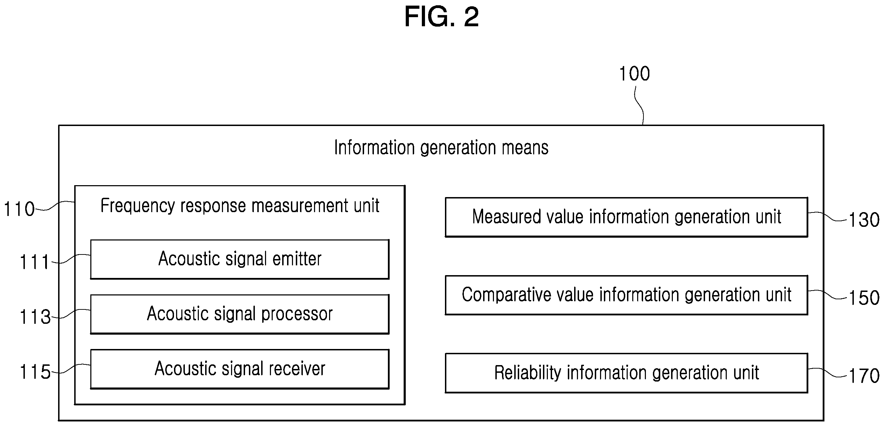

FIG. 2 is a block diagram of an embodiment of the information generation means of the space monitoring system according to the present disclosure.

The information generation means 100 may include a frequency response measurement unit 110, a measured value information generation unit 130, a comparative value information generation unit 150, and a reliability information generation unit 170.

As an example, the frequency response measurement unit 110 may include an acoustic signal emitter 111, an acoustic signal processor 113, and an acoustic signal receiver 115, and may measure the frequency response of the target space through an acoustic signal.

The acoustic signal emitter 111 may include a means configured to emit an acoustic signal, such as a speaker, and may emit an acoustic signal to the target space. Here, the acoustic signal emitter 111 may emit various forms of acoustic signals.

As an example, the acoustic signal emitter 111 may emit a single-tone acoustic signal with a frequency that varies over time while emitting only one frequency of sound at a specific time. Here, the acoustic signal emitter may emit a single-tone acoustic signal whose frequency varies linearly over time, or may emit a single-tone acoustic signal whose frequency varies stepwise over time while remaining at the same frequency for a predetermined period of time.

Alternatively, the acoustic signal emitter may emit an acoustic signal of a synthesized sound including a plurality of frequency components whose frequency does not change over time. Alternatively, the acoustic signal emitter may emit an acoustic signal of a synthesized sound including a plurality of frequency components whose frequency changes over time. Alternatively, the acoustic signal emitter may emit an acoustic signal that alternates between a single sound and a synthesized sound.

In addition, the acoustic signal emitter 111 may emit an acoustic signal through a single speaker or may emit an acoustic signal through a plurality of speakers. When emitting the acoustic signal through the plurality of speakers, the acoustic signal emitter may emit the same acoustic signal or different acoustic signals.

The acoustic signal receiver 115 may include various measurement means configured to measure sound pressure, sound intensity, and the like, such as a microphone. The acoustic signal receiver 115 may receive an acoustic signal through a single microphone or may receive an acoustic signal through a plurality of microphones.

The acoustic signal emitter 111 and the acoustic signal receiver 115 may be configured as one apparatus and may be disposed at the same location, or the acoustic signal emitter 111 and the acoustic signal receiver 115 may be configured as different apparatuses and may be disposed at different locations in a state of being spaced apart from each other.

The acoustic signal processor 113 may provide an acoustic signal to be emitted to the target space to the acoustic signal emitter 111. In addition, the acoustic signal processor 113 may measure the frequency response of the space based on the acoustic signal received by the acoustic signal receiver 115.

As an example, if the acoustic signal is a synthesized sound including a plurality of frequency components, the acoustic signal processor 113 may transform the received acoustic signal into the frequency domain through Fourier Transform (FT) or Fast Fourier Transform (FFT) to measure the frequency response of the space. As another example, if the acoustic signal is a single sound whose frequency varies over time, the acoustic signal processor may measure the sound pressure or the phase value that varies over time and may replace the same with sound pressure or phase value information that varies with frequency. In this case, therefore, the acoustic signal processor 113 may directly measure the frequency response of the space without transforming the received acoustic signal through Fourier Transform.

The frequency response measurement unit 110 may be included as one component of the information generation means 100, as in the embodiment shown in FIG. 2, but in some circumstances, the frequency response measurement unit 110 may be configured as a terminal separate from the information generation means 100.

The measured value information generation unit 130 may generate measured value information including frequency response information of a space measured at a specific point in time or over a specific time interval. For example, the measured value information generation unit 130 may receive the frequency response information of the space measured by the frequency response measurement unit 110 at a specific point in time or over a specific time interval, and may generate measured value information including the point-in-time information or the time interval information and the frequency response information of the space.

The measured value information generated by the measured value information generation unit 130 may be transmitted to the database construction means 200 for organization and storage.

The comparative value information generation unit 150 may generate comparative value information by comparing measured value information at a specific point in time or over a specific time interval with measured value information at another point in time or over another time interval.

As an example, the comparative value information generation unit 150 may generate comparative value information by comparing measured value information at the current point in time or over the current time interval generated by the measured value information generation unit 130 with measured value information at another point in time or over another time interval stored in the database construction means 200. Alternatively, the comparative value information generation unit 150 may generate comparative value information by comparing a plurality of pieces of measured value information stored in the database construction means 200. That is, the comparative value information generation unit 150 may generate information in temporal linkage with the measured value information generation unit 130, or may independently generate information.

The comparative value information generated by the comparative value information generation unit 150 may be organized and stored in the database construction means 200.

The reliability information generation unit 170 may evaluate the reliability of the measured value information to generate measured value reliability evaluation information. In addition, the reliability information generation unit 170 may evaluate the reliability of the comparative value information to generate comparative value reliability evaluation information.

As an example, the reliability information generation unit 170 may evaluate the reliability of the measured value information by evaluating at least one of various reliability evaluation factors for the measured value information, such as noise, measurement stability, spectral variability, and frequency resolution adequacy, and may generate measured value reliability evaluation information based thereon.

As an example, the reliability information generation unit 170 may evaluate the reliability of the comparative value information based on the measured value reliability evaluation information for each piece of measured value information corresponding to the comparative value information, and generate comparative value reliability evaluation information based thereon. For example, the reliability information generation unit 170 may select the minimum value or calculate a multiplicative value from the measured value reliability evaluation information for each piece of measured value information corresponding to the comparative value information, and may generate the minimum value or the multiplicative value as the comparative value reliability evaluation information for the comparative value information. The generation of the comparative value reliability evaluation information may be performed in temporal linkage with the generation of the measured value reliability evaluation information, or may be independently performed.

As such, the information generation means 100 may include the components described above, may measure the frequency response of the target space periodically or in response to a control signal, may generate and provide various data for constructing a database based thereon, and may provide the same as real-time data for situation determination of the target space.

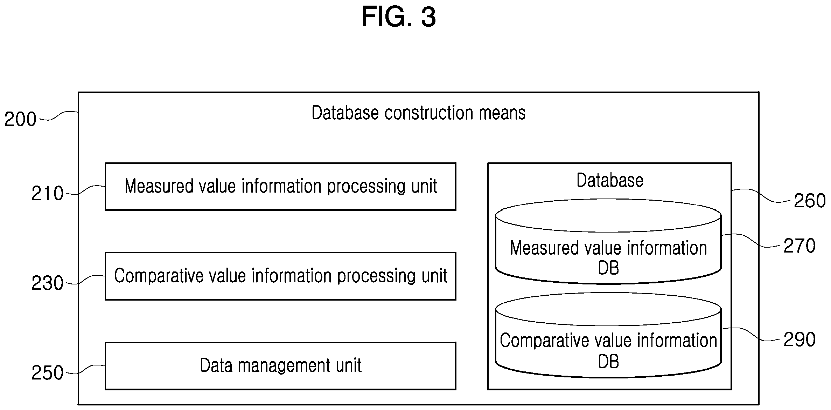

FIG. 3 is a block diagram of an embodiment of the database construction means of the space monitoring system according to the present disclosure.

The database construction means 200 may include a measured value information processing unit 210, a comparative value information processing unit 230, a data management unit 250, and a database 260. The database 260 may be configured as a single integrated storage medium, or may be configured as a storage medium divided into a measured value information storage unit 270 and a comparative value information storage unit 290.

The measured value information processing unit 210 may organize measured value information measured at a specific point in time or over a specific time interval in chronological order in linkage with the information generation means 100, and may store the same in the database 260. Preferably, the measured value information processing unit 210 may store the measured value information in the measured value information storage unit 270 in a state of corresponding to a specific point in time or a specific time interval. Here, the measured value information storage unit 270 may include various storage means or a temporary storage buffer configured to store the measured value information.

As an example, if the information generation means 100 has evaluated the reliability of the measured value information, the measured value information processing unit 210 may select only measured value information having a reliability evaluation of the measured value information equal to or greater than a reference value, and may store the same in the measured value information storage unit 270.

In addition, the measured value information processing unit 210 may store the measured value information and the measured value reliability evaluation information in the measured value information storage unit 270 in a matched state.

The comparative value information processing unit 230 may receive the comparative value information in linkage with the information generation means 100, may organize and process the same, and may store the same in the comparative value information storage unit 290.

As an example, the comparative value information processing unit 230 may generate a chronologically ordered multidimensional data table by matching comparative value information at a specific point in time with comparative value information at another point in time compared therewith or comparative value information over a specific time interval with comparative value information over another time interval compared therewith, and may store the same in the comparative value information storage unit 290. Here, the comparative value information processing unit 230 may generate a numerical multidimensional data table with data values of the comparative value information, or may generate a visual multidimensional data table by expressing the data values of the comparative value information with various factors such as contrast, color, size, and height.

Furthermore, the comparative value information processing unit 230 may generate a chronologically ordered multidimensional data table by reflecting the comparative value reliability evaluation information for the comparative value information.

As an example, the comparative value information processing unit 230 may generate a higher-dimensional data table by reflecting the comparative value reliability evaluation information in the multidimensional data table for the comparative value information. Here, the comparative value information processing unit 230 may generate a numerical multidimensional data table by matching data values of the comparative value information with data values of the comparative value reliability evaluation information, or may generate a visual multidimensional data table expressed using various factors, such as contrast, color, size, and height, by matching the data values of the comparative value information with the data values of the comparative value reliability evaluation information.

In addition, the comparative value information processing unit 230 may store the multidimensional data table having the comparative value reliability evaluation information reflected in the comparative value information in the comparative value information storage unit 290.

The data management unit 250 may maintain the data and data tables stored in the measured value information storage unit 270 and the comparative value information storage unit 290.

As an example, the data management unit 250 may sequentially remove older measured value information from the measured value information storage unit 270 when the number of pieces of measured value information stored in the measured value information storage unit 270 exceeds a predetermined number or when the storage time of the measured value information exceeds a predetermined time.

As such, the database construction means 200 may include the components described above, may organize, process, and cumulatively store the measured value information and the comparative value information, and may provide the stored data when determining the situation of the target space.

In particular, the database construction means 200 may provide not only measured value information corresponding to the frequency response of the space but also comparative value information generated by comparing measured value information at different points in time or during different time intervals to the space situation determination means 300, which will be described later, as a multidimensional data table, thereby significantly improving the data processing speed for determining the space situation of the space situation determination means 300.

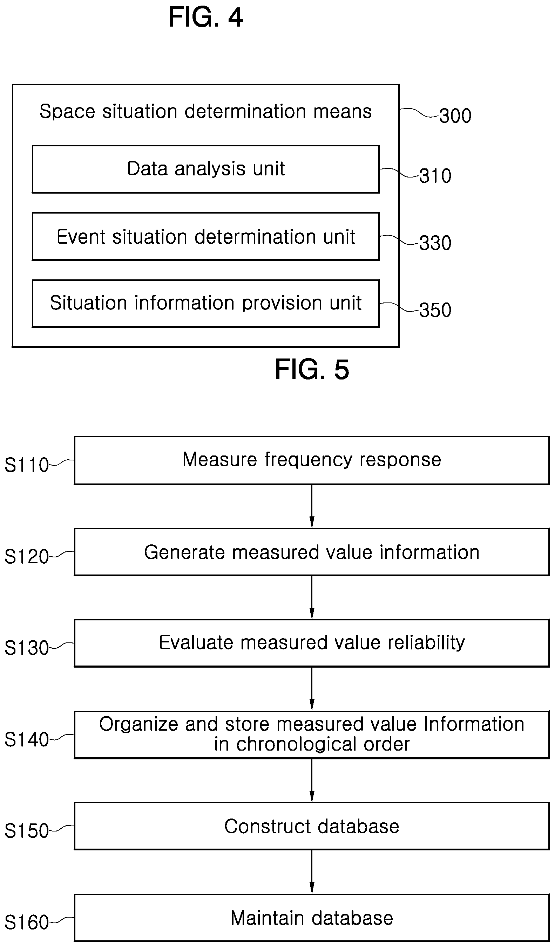

FIG. 4 is a block diagram of an embodiment of the space situation determination means of the space monitoring system according to the present disclosure.

The space situation determination means 300 may include a data analysis unit 310, an event situation determination unit 330, and a situation information provision unit 350.

The data analysis unit 310 may receive measured value information at a specific point in time or over a specific time interval from the information generation means 100, and may receive measured value information at a plurality of different points in time or over a plurality of different time intervals from the database construction means 200. The data analysis unit 310 may analyze the degree of change and the pattern of change of measured value information by comparing measured value information at a specific point in time or over a specific time interval with a plurality of pieces of measured value information at other points in time or over other time intervals.

Alternatively, the data analysis unit 310 may receive the multidimensional data table from the database construction means 200 to analyze the degree of change and the pattern of change of the comparative value information.

The event situation determination unit 330 may determine the situation of the target space based on the analysis results of the data analysis unit 310.

As an example, the event situation determination unit 330 may determine the situation of the target space by comparing the analysis results, such as the degree of change and the pattern of change of the measured value information and the degree of change and the pattern of change of the comparative value information, with previously stored situation-specific information.

As such, the data analysis unit 310 may analyze the data stored in the database construction means 200, and the event situation determination unit 330 may determine the situation of the target space based on the analysis results.

The situation information provision unit 350 may provide state information of the target space determined by the event situation determination unit 330.

The state information provided by the situation information provision unit 350 may include various pieces of event situation information, such as invasion into the target space or fire in the target space. In addition, the state information may include a multidimensional data table that visually expresses the current situation. As an example, the situation information provision unit 350 may extract and provide a visual multidimensional data table stored in the database construction means 200. Alternatively, the situation information provision unit 350 may extract a numerical multidimensional data table stored in the database construction means 200, and may generate and provide a visual multidimensional data table using the same. At this time, a visual multidimensional data table expressing data with various factors, such as contrast, color, size, and height, may be generated and provided to the user.

Furthermore, the situation information provision unit 350 may provide a multidimensional data table visually expressing a reference situation along with a multidimensional data table visually expressing the current situation. Here, a visual multidimensional data table for reference state information may be a typical visual multidimensional data table corresponding to an event situation, such as intrusion or fire, and a multidimensional data table corresponding to each reference situation may be prestored in the situation information provision unit 350. This allows the user or the administrator to visually compare the multidimensional data table for the current situation with the multidimensional data table for the reference situation in order to instantly recognize the current situation of the target space.

As such, the present disclosure proposes a space monitoring system capable of constructing a database configured to organize and store various situation-specific analysis data and accurately and instantly determining the space situation based thereon.

In addition, the present disclosure proposes a space monitoring method using an acoustic signal, and hereinafter, the space monitoring method according to the present disclosure will be described with reference to the embodiment of the space monitoring system according to the present disclosure described above. First, a database construction process of the space monitoring method will be described through an embodiment, and a space situation monitoring process using the constructed database will be described through an embodiment.

FIG. 5 is a flowchart of an embodiment of the database construction process of the space monitoring method according to the present disclosure.

The information generation means 100 may measure the frequency response of a target space (S110), and may generate measured value information based thereon (S120).

As an example, the information generation means 100 may emit an acoustic signal into the target space and may receive the acoustic signal reflected from the target space. Here, the acoustic signal may be an acoustic signal of a synthesized sound including a plurality of frequency components, an acoustic signal of a single sound whose frequency changes over time, or an acoustic signal that alternates between a synthesized sound and a single sound, as described above.

The information generation means 100 may measure the frequency-specific sound pressure or phase based on an acoustic signal received at a specific point in time or over a specific time interval.

As an example, when utilizing an acoustic signal of a synthesized sound including a plurality of frequency components, the received acoustic signal may be transformed into the frequency domain using a Fourier Transform algorithm or a Fast Fourier Transform algorithm to measure the frequency-specific sound pressure.

As another example, when utilizing an acoustic signal of a single sound whose frequency changes over time, a sound of a specific single frequency is emitted at a specific point in time, and therefore the information generation means 100 may measure the frequency response of the space by immediately converting a sound pressure value or a phase value measured at a specific point in time into a sound pressure value or a phase value according to an emission frequency. That is, in this case, the sound pressure value according to the frequency is measured in near real time, and Fourier Transform may not be required.

The information generation means 100 may generate measured value information by matching d the measured frequency response information of the space with specific point-in-time information or specific time interval information.

The information generation means 100 may transmit the measured value information to the database construction means 200, and the database construction means 200 may organize and store the measured value information in chronological order (S140).

Preferably, the information generation means 100 evaluates the reliability of the measured value information (S130). As an example, the information generation means 100 may evaluate at least one of various reliability evaluation factors for the measured value information, such as noise, measurement stability, spectral variability, and frequency resolution adequacy. The information generation means 100 may further generate measured value reliability evaluation information for the measured value information.

The database construction means 200 may match the measured value information with the measured value reliability evaluation information, and may organize and store the same in chronological order (S140).

As an example, if a reliability evaluation has been made on the measured value information, the information generation means 100 may provide only the measured value information for which the measured value reliability evaluation information is equal to or greater than a reference value to the database construction means 200. Alternatively, the information generation means 100 may transmit the measured value reliability evaluation information along with the measured value information to the database construction means 200, and the database construction means 200 may select and store only the measured value information for which the measured value reliability evaluation information is equal to or greater than the reference value.

As another example, regardless of whether the measured value reliability evaluation information is equal to or greater than the reference value, the database construction means 200 may match the measured value information with the measured value reliability evaluation information, and may organize and store the same in chronological order.

The information generation means 100 and the database construction means 200 may perform the above process periodically or repeatedly in response to a control signal to construct the database (S150).

Furthermore, the database construction means 200 may maintain the stored data (S160). As an example, the database construction means 200 may remove older measured value information when the number of pieces of stored measured value information exceeds a predetermined number or when the storage time of the measured value information exceeds a predetermined time.

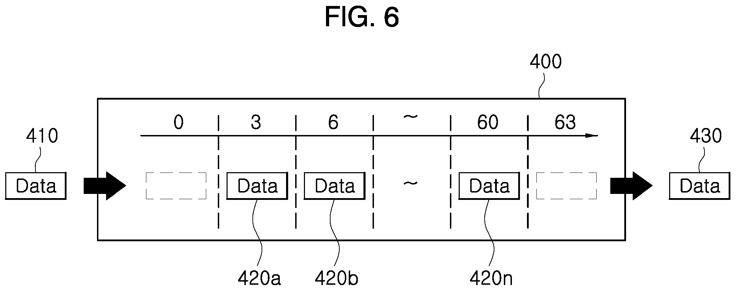

In this regard, FIG. 6 shows an embodiment of maintaining the database in the database construction process of the space monitoring method according to the present disclosure.

Referring to FIG. 6, the database construction means 200 may store sequential pieces of measured value information 420a, 420b, and 420n at three-second intervals from 0 seconds to 60 seconds as measured value information data 400. When time passes and new measured value information 410 at the current point in time is received, the database construction means 200 may delete measured value information 430 at the past point in time 60 or more seconds before the current point in time, and may organize and store the new measured value information 410 at the current point in time in chronological order.

This is an embodiment, and the measured value information stored in the database construction means 200 may be continuously deleted and updated according to a predetermined storage time or a predetermined storage number. Here, the predetermined storage time and the predetermined storage number may be appropriately changed as needed.

Next, a process of evaluating the reliability of measured value information based on various reliability evaluation factors according to the present disclosure will be described.

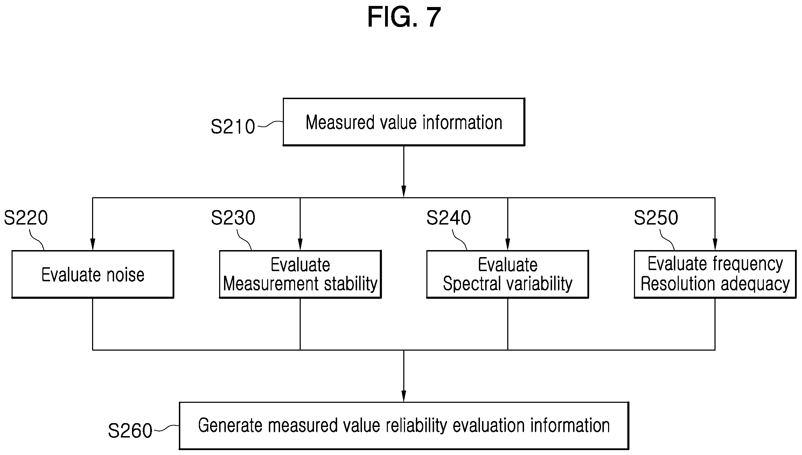

FIG. 7 is a flowchart of an embodiment of evaluating the reliability of measured value information in the database construction process of the space monitoring method according to the present disclosure.

When measured value information is generated (S210), the information generation means 100 may evaluate the reliability of the measured value information through various evaluation factors.

As an example, noise of the measured value information may be evaluated (S220). In addition, measurement stability may be evaluated (S230). In addition, spectral variability of the measured value information may be evaluated (S240). In addition, frequency resolution adequacy of the measured value information may be evaluated (S250). These reliability evaluation factors are examples, and various other evaluation factors enabling determination of the reliability of the measured value information may be considered.

The information generation means 100 may selectively evaluate at least one of the various reliability evaluation factors, such as noise evaluation, measurement stability evaluation, spectral variability evaluation, and frequency resolution adequacy evaluation, or may simultaneously evaluate a plurality of evaluation factors.

The information generation means 100 may generate measured value reliability evaluation information by reflecting an evaluation result according to a reliability evaluation factor (S260). The information generation means 100 may generate measured value reliability evaluation information individually including evaluation results according to a plurality of reliability evaluation factors. Alternatively, the information generation means may generate a single comprehensive evaluation result acquired by synthesizing a plurality of evaluation results according to a plurality of reliability evaluation factors as measured value reliability evaluation information.

As an example, when the evaluation results according to the reliability evaluation factors are calculated as numbers or levels, the information generation means 100 may select the evaluation result having the minimum value or the lowest level among the reliability-evaluation-factor-specific results or may generate the measured value reliability evaluation information using the multiplication value of the reliability-evaluation-factor-specific results.

Each of the reliability evaluation factors to evaluate the reliability of the measured value information will be described in more detail.

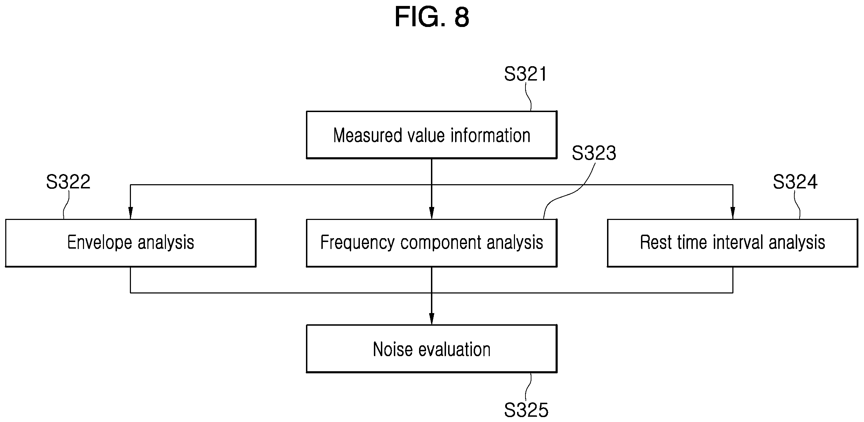

With regard to a noise evaluation of the measured value information, FIG. 8 shows an embodiment of a "noise" evaluation, which is one of the measured value reliability evaluations for the measured value information, in the database construction process according to the present disclosure.

When noise that is temporarily or continuously generated in a target space is received in a state of being mixed in an acoustic signal, the noise causes errors in grasping the situation in the space. For example, an error in which it is incorrectly determined that a specific event has occurred in the space even though the event has not actually occurred or an error in which an urgent event is not recognized due to the noise even though the event has occurred may be caused.

The noise may significantly degrade the detection reliability of the space monitoring system. In particular, when a plurality of frequency response measurement units 110 is disposed in adjacent spaces, acoustic signals emitted by other frequency response measurement units may act as noise to a specific frequency response measurement unit. Disposing a plurality of frequency response measurement units in order to more closely monitor a space to be monitored may cause a decrease in the monitoring performance of the space monitoring system.

In the present disclosure, the reliability information generation unit 170 of the information generation means 100 may generate measured value reliability evaluation information by evaluating the noise of the measured value information.

The reliability information generation unit 170 may receive the measured value information generated by the frequency response measurement unit 110 (S321), and may apply various methods, such as envelope analysis, frequency component analysis, and rest time interval analysis, to the measured value information to evaluate noise of the measured value information.

As one approach to evaluating noise, the noise may be evaluated by performing envelope analysis (S322) on the measured value information. For example, an envelope of the measured value information may be detected, and the noise may be evaluated by comparing the shape and size of the detected envelope with an envelope of a reference value.

As another approach to evaluating noise, the noise may be evaluated by performing frequency component analysis (S323) on the measured value information. For example, if a frequency component other than a frequency component of an acoustic signal emitted to a target space appears in the measured value information as a sound pressure equal to or greater than a predetermined level, noise may be evaluated as being present. Alternatively, if the frequency response of the measured value information differs from the typical frequency response by a predetermined level or higher, noise may be evaluated as being introduced.

Alternatively, noise may be evaluated by filtering the measured value information using a frequency filter to measure the intensity of the frequency component other than the frequency of the acoustic signal emitted to the target space. For example, no sound in a frequency domain other than the frequency of the acoustic signal emitted by the frequency response measurement unit 110 must be received in the absence of external noise, but if a sound pressure equal to or greater than a predetermined level is measured in a frequency domain other than the frequency of the emitted acoustic signal, noise may be evaluated as being introduced.

This approach is based on the reasonable assumption that, if noise of the frequency component different than the frequency of the emitted acoustic signal is measured, it is likely to contain noise of the same frequency component as the emitted acoustic signal, or, even if not, it is likely to lead to errors in the process of grasping the situation of the space.

As a further approach to evaluating noise, time intervals may be divided into an activation time interval and a rest time interval, if a sound is emitted to the target space only over the activation time interval, the noise over the rest time intervals before and after a specific activation time interval may be analyzed (S324) to evaluate the noise over the specific activation time interval. For example, if noise is evaluated as being present over the rest time interval before or after the specific activation time interval, it may be determined that the measured value information over the specific activation time interval is likely to contain noise.

Furthermore, the various noise evaluation approaches described above may be applied selectively or cumulatively to evaluate the noise of the measured value information (S325). Noise may be evaluated as one of the measured value reliability evaluation factors for the measured value information through the above process.

Measured value reliability evaluation information for the measured value information may be generated based on the noise evaluation result. For example, the measured value reliability evaluation information may be generated to determine whether noise has been introduced into the measured value information. Alternatively, the degree of introduction of noise may be converted into a numerical value or be indicated by a level to generate measured value reliability evaluation information for the measured value information.

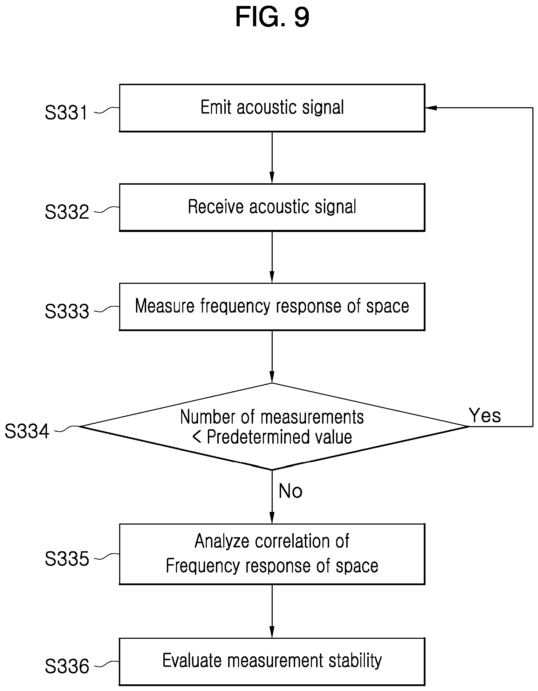

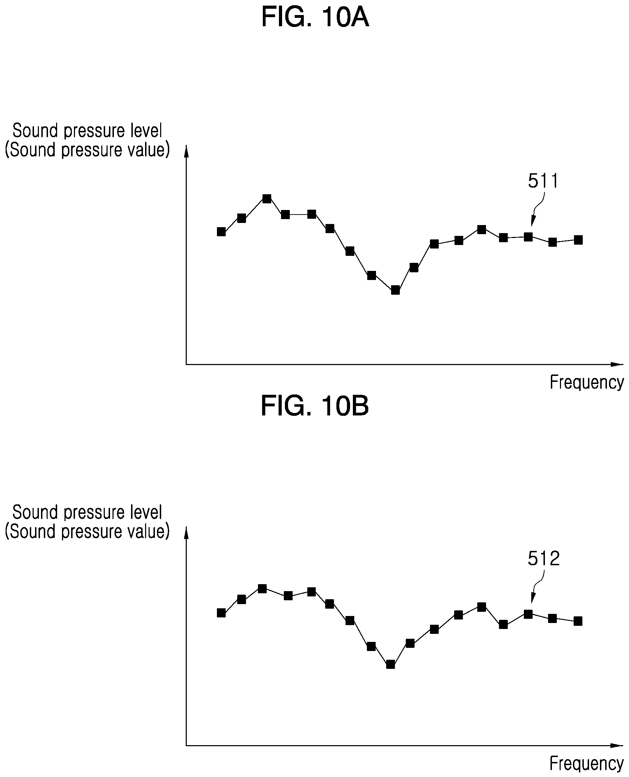

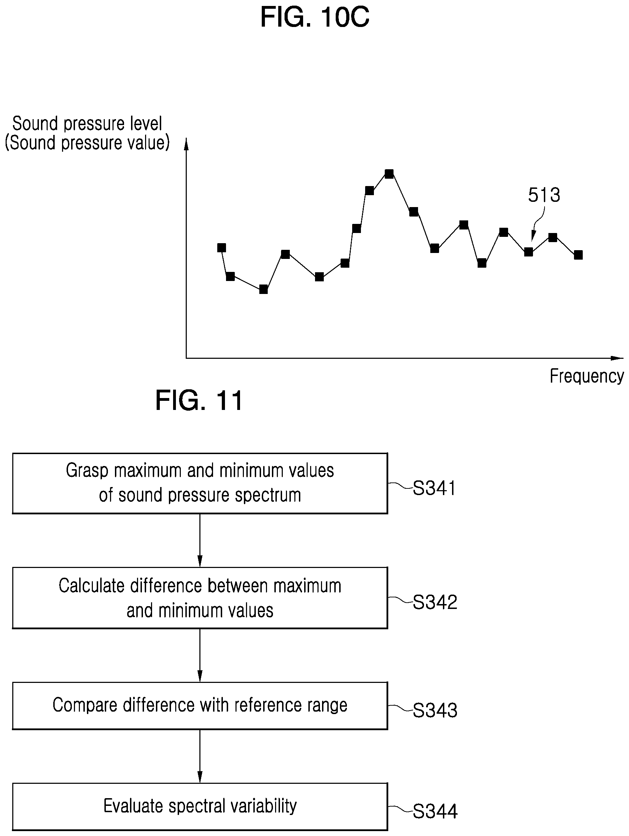

FIGs. 9 and 10 show an embodiment of a "measurement stability" evaluation, which is one of the measured value reliability evaluations for the measured value information, in the database construction process according to the present disclosure.

When there is no change in the situation in the same target space, the stability of the space monitoring system may be said to be secured only if there is no significant difference between the repeatedly measured frequency responses of the space. If the frequency responses are differently measured in the same target space despite the absence of situation changes, the reliability of the space monitoring system may be reduced. The reliability (measurement stability) of the space monitoring system may vary depending on, for example, the frequency of the emitted acoustic signal.

In order to determine the measurement stability, the frequency response measurement unit 110 of the information generation means 100 repeatedly emits an acoustic signal to the target space (S331), and receives the acoustic signal from the target space (S332). The frequency response measurement unit may repeatedly measure the frequency response of the space using the received acoustic signal (S333).

The frequency response measurement unit 110 of the information generation means 100 may acquire measured value information a predetermined number of times (S334). The reliability information generation unit 170 of the information generation means 100 may analyze the correlation or similarity of each piece of the measured value information (S335), and may evaluate measurement stability for the emitted acoustic signal based thereon (S336).

FIG. 10 shows the frequency response of the space as a sound pressure spectrum. It is assumed that a first sound pressure spectrum 511 as shown in (a) of FIG. 10 and a second sound pressure spectrum 512 as shown in (b) of FIG. 10 are acquired by repeatedly emitting and receiving the same acoustic signal to and from the target space.

If the correlation between the first sound pressure spectrum 511 and the second sound pressure spectrum 512 is analyzed to determine the degree of similarity, it may be evaluated that similarity is equal to or greater than a reference value, and thus it may be determined that measurement stability has been satisfied. If the measurement stability is satisfied to a predetermined level by repeatedly evaluating the measurement stability for the emitted acoustic signal, the emitted acoustic signal may be considered as an acoustic signal suitable for monitoring of the target space.

As another case, it is assumed that a first sound pressure spectrum 511 as shown in (a) of FIG. 10 and a third sound pressure spectrum 513 as shown in (c) of FIG. 10 are acquired by repeatedly emitting and receiving the same acoustic signal to and from the target space.

If the correlation between the first sound pressure spectrum 511 and the third sound pressure spectrum 513 is analyzed to determine the degree of similarity, it may be evaluated that similarity is less than the reference value, and in this case, it may be determined that the measurement stability has not been satisfied. In such a case, the emitted acoustic signal may be considered as an acoustic signal that is not suitable for monitoring of the target space. That is, the frequency response of the space measured by emitting such an acoustic signal may not be suitable for determining the situation of the target space.

The measurement stability may be evaluated as one of the measured value reliability evaluations through the above process. For example, measured value reliability evaluation information may be generated to determine whether the measurement stability is suitable for the measured value information based on the evaluation result of the measurement stability. Alternatively, the degree of measurement stability may be converted into a numerical value or be indicated by a level to generate measured value reliability evaluation information for the measured value information.

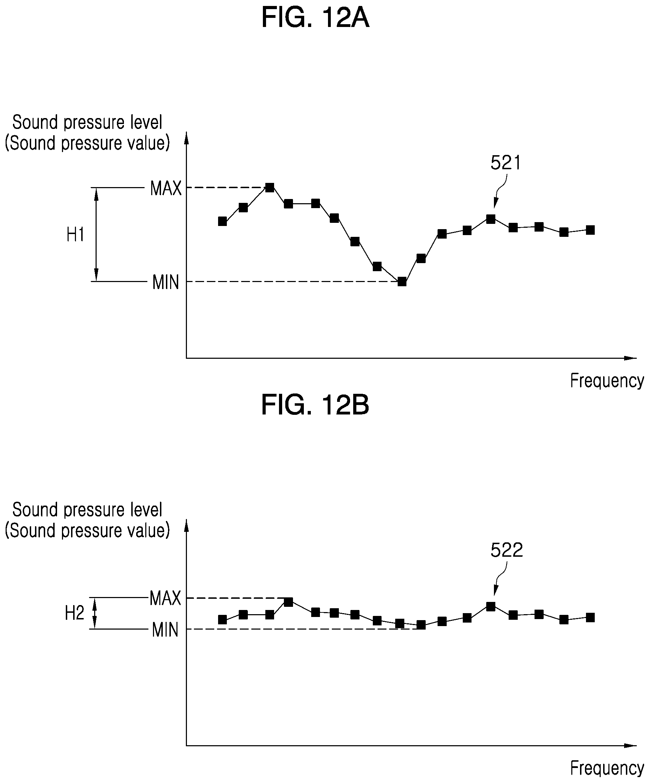

FIGs. 11 and 12 show an embodiment of a "spectral variability" evaluation, which is one of the measured value reliability evaluations for the measured value information, in the database construction process according to the present disclosure.

For the sound pressure spectrum as the frequency response of the space, if the sound pressure of a spectrum measured by emitting a specific acoustic signal to the target space has a width equal to or greater than a reference range, the spectrum may be determined to have appropriate variability. Conversely, if the sound pressure of the measured spectrum has a width less than the reference range, the spectrum may not have appropriate variability, and it may be determined that it is not suitable to grasp the situation of the target space using the acoustic signal.

Temperature changes in the space may be grasped by measuring the frequency shift between repeatedly measured sound pressure spectra. The precision of the measurement of the frequency shift may be improved in proportion to the difference between the maximum and minimum sound pressure values that vary with frequency. If the difference between the maximum and minimum sound pressure values is too small, resulting in a flat curve in the sound pressure spectrum, it is difficult to accurately measure the frequency shift. Therefore, it is necessary to select an acoustic signal in which the maximum and minimum sound pressure values differ from each other by a predetermined level or more in the sound pressure spectrum.

As an example for determining the spectral variability, the maximum and minimum sound pressure values in the measured sound pressure spectrum are grasped (S341). Subsequently, the difference between the maximum and minimum values may be calculated (S342), and the same may be compared with a reference range (S343) to evaluate the spectral variability for the acoustic signal (S344).

An example of the evaluation of the spectral variability will be described with reference to FIG. 12, wherein FIG. 12 shows the frequency response of the space as the sound pressure spectrum.

It is assumed that a fourth sound pressure spectrum 521 as shown in (a) of FIG. 12 is acquired by emitting and receiving a specific acoustic signal to and from the target space. In the fourth sound pressure spectrum 521, the difference value between the maximum value MAX and the minimum value MIN of the sound pressure value is indicated by H1, and if the difference value H1 satisfies a predetermined reference range, the spectral variability may be satisfied. In this case, the frequency response of the space measured using the specific emitted acoustic signal that has been used may be reliable with respect to spectral variability when detecting temperature changes in the space.

In another case, it is assumed that a fifth sound pressure spectrum 522 as shown in (b) of FIG. 12 is acquired by emitting and receiving a specific acoustic signal to and from the target space.

In the fifth sound pressure spectrum 522, the difference value between the maximum value MAX and the minimum value MIN of the sound pressure value is indicated by H2, and if the difference value H2 does not satisfy the predetermined reference range, the spectral variability cannot be satisfied. In this case, measuring the frequency response of the space using the specific emitted acoustic signal that has been used may not be suitable for detecting temperature changes in the target space.

In the above, the difference value between the maximum and minimum values of the sound pressure value of the spectrum was used as a criterion for determining the spectral variability, but in addition, the degree of scattering, such as the variance, standard deviation, mean deviation, or quartile deviation of the sound pressure value, may also be a criterion for judging the spectral variability.

The spectral variability may be evaluated as one of the measured value reliability evaluations through the above process. For example, measured value reliability evaluation information may be generated to determine whether the spectral variability is suitable for the measured value information based on the evaluation result of the spectral variability. Alternatively, the degree of spectral variability may be converted into a numerical value or be indicated by a level to generate measured value reliability evaluation information for the measured value information.

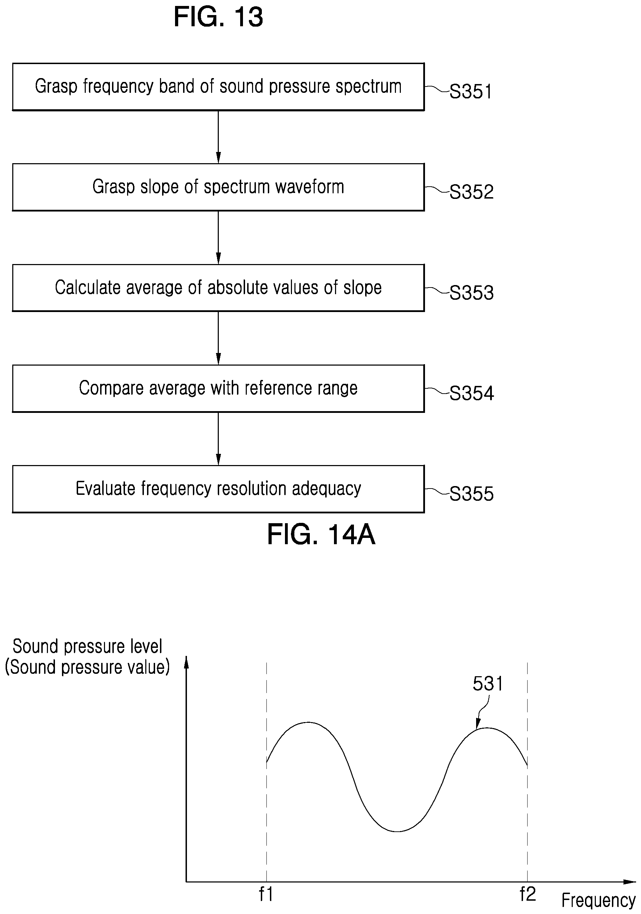

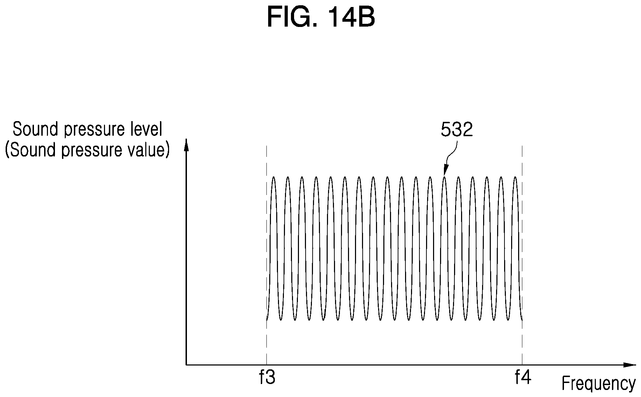

FIGs. 13 and 14 show an embodiment of a "frequency resolution adequacy" evaluation, which is one of the measured value reliability evaluations for the measured value information, in the database construction process according to the present disclosure.

Even if the spectral variability described above is satisfied, the measured frequency response of the space may include errors if the frequency resolution adequacy is not satisfied.

Frequency resolution refers to the distance between the nearest neighboring frequencies that can be distinguished. When the frequency response of a space is measured by emitting an acoustic signal of a synthesized sound including N frequency components, the measured sound pressure spectrum may be expressed by N points indicating the sound pressure at N frequencies, in which case the frequency interval between the respective points may be resolution.

If the emitted sound is in the form of a sine sweep in which a single frequency linearly varies over time, the measured sound pressure spectrum may be expressed as a curve rather than expressed as an integer number of points. However, even if the spectrum is expressed as a curve, there is still resolution, which is the ability to distinguish between a specific frequency and a frequency closest thereto. In this case, the resolution is determined by the performance of the components constituting the space monitoring system, the operating conditions of the space monitoring system, the data processing conditions, the sampling rate, etc.

If there are too many peaks within a frequency band (window) of a spectrum, the spectrum may not be accurately expressed without sufficient resolution. In such a case, the acoustic signal must be changed such that the frequency resolution is adequate to accurately measure the frequency response of the space.

As an example, comparing (a) and (b) of FIG. 14, the difference between the maximum and minimum values of the sound pressure, i.e., the spectral variability, is the same in both cases, but a spectrum 531 in (a) of FIG. 14 is relatively flat and has a small number of peaks in the window, whereas a spectrum 532 in (b) of FIG. 14 has a large number of peaks in the window due to severe bending. Therefore, for the spectrum 531 as shown in (a) of FIG. 14, the spectrum may be expressed as 20 points using 20 frequencies as an example. However, in order to properly express the spectrum 532 as shown in (b) of FIG. 14, it is necessary to express the spectrum as 200 points using 200 frequencies as an example, and therefore the frequency interval or the frequency resolution must be narrow in proportion thereto.

If the frequency resolution is evaluated to be inadequate, the center frequency may be changed to re-evaluate the adequacy of the frequency resolution at another frequency band, or alternatively, the resolution (e.g., frequency interval) itself may be adjusted while leaving the center frequency unchanged.

As an example, the evaluation of the frequency resolution adequacy may be based on the slope of the spectrum. For example, it is assumed that a sound pressure spectrum is expressed as sound pressure values (vertical axis coordinate values) for N frequencies (horizontal axis coordinate values) with frequency interval d. If the average of the absolute values of the slope of the spectrum is small, as shown in (a) of FIG. 14, the shape of the spectrum may be appropriately expressed even if the frequency interval d is large. On the other hand, if the average of the absolute values of the slope of the spectrum is large, as shown in (b) of FIG. 14, the frequency interval d must be sufficiently narrow to fully express the spectrum.

If the spectrum is expressed as sound pressure values for N frequencies, there are N-1 absolute values p of the difference in sound pressure values between neighboring frequencies, and if the sum of the N-1 absolute values p is divided by a window width d* (N-1), this may be the average of the absolute values of the slope of the spectral waveform. Meanwhile, if the spectrum is expressed as a curve, the absolute values of the difference between the maximum and minimum values for a number of peaks in the spectrum are added and divided by the window width, this is the average of the absolute values of the slope of the spectrum.

Referring to FIG. 13, in order to evaluate the adequacy of the frequency resolution, the frequency band of the sound pressure spectrum is grasped (S351), the slope of the spectrum waveform is grasped (S352), and the average of the absolute values of the slope is calculated (S353). Subsequently, the calculated average may be compared with a reference range (S354) to evaluate the adequacy of the frequency resolution (S355).

The frequency resolution adequacy, which is one of the reliability evaluation factors for the measured value information, may be evaluated through the above process. For example, measured value reliability evaluation information may be generated to determine whether the frequency resolution adequacy is suitable for the measured value information based on the evaluation result of the frequency resolution adequacy. Alternatively, the degree of resolution adequacy may be converted into a numerical value or be indicated by a level to generate measured value reliability evaluation information for the measured value information.

The reliability information generation unit 170 of the information generation means 100 may generate measured value reliability evaluation information that individually includes evaluation results according to the plurality of reliability evaluation factors. Alternatively, a single comprehensive evaluation result acquired by synthesizing a plurality of evaluation results according to the plurality of reliability evaluation factors may be generated as the measured value reliability evaluation information.

In the present disclosure, the database construction means 200 may store the measured value reliability evaluation information described above in a state of matching with the measured value information, thereby reducing the amount of stored data while minimizing the error in grasping the situation of the space.

The received acoustic signal contains the most information, but the acoustic signal is also the most voluminous. For example, a sound must be received for three seconds in order to measure a single frequency response, and if the voltage output from a microphone is measured 200,000 times per second with a precision of two bytes, 1.2 megabytes of data must be stored for a single frequency response measurement.

However, if the received acoustic signal is not permanently stored but only the measured frequency response data are stored and if a frequency response spectrum consists of 100 points with a precision of 2 bytes, a single frequency response measured value occupies 200 bytes.

This may reduce the amount of data stored by a factor of 6000, but at the cost of losing important information contained in the received acoustic signal. The most typical example is noise information.

In the present disclosure, for example, instead of storing 1.2 megabytes of received acoustic signals, 200 bytes of frequency response data is stored, and in addition to this, noise and reliability information are stored in a capacity of, for example, 2 bytes. Thus, the amount of data that needs to be stored is greatly reduced, but important information, such as measured value reliability information that cannot be lost, is stored separately, and finally, reliability in grasping the situation of the space to be monitored is secured.

Furthermore, in the present disclosure, it is possible to further reduce the amount of stored data by storing measured value information for a predetermined period of time, generating comparative value information through comparison between measured value information at a specific point in time or over a specific time interval and measured value information at another point in time or over another time interval, and organizing and storing the same in chronological order. For example, storing two pieces of frequency response measured value information may require a capacity of 400 bytes, but in the present disclosure, two frequency response measured values are compared and comparative value information is stored, whereby a capacity of 8 bytes may be sufficient.

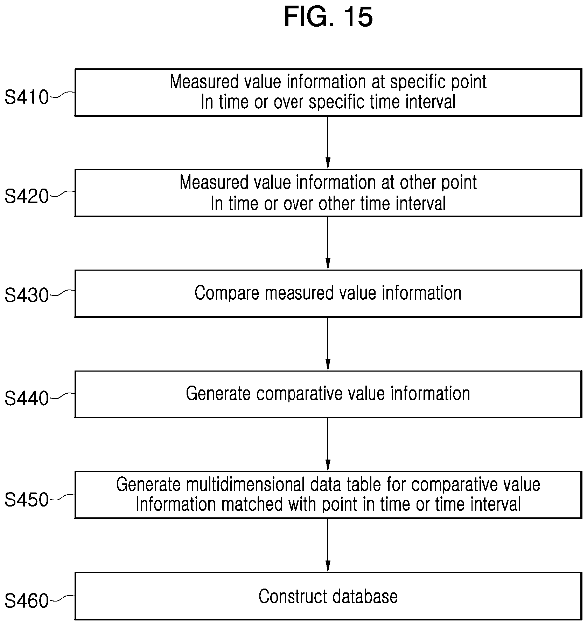

In this regard, FIG. 15 is a flowchart of another embodiment of the database construction process of the space monitoring method according to the present disclosure.

When measured value information at a specific point in time or over a specific time interval is acquired (S410), the information generation means 100 extracts measured value information at another point in time or over another time interval stored in the measured value information storage unit 270 (S420). The comparative value information generation unit 150 of the information generation means 100 may compare the measured value information at the specific point in time with the measured value information at the other point in time or the measured value information over the specific time interval with the measured value information over the other time interval (S430) to generate comparative value information (S440).

Here, the comparative value information generation unit 150 of the information generation means 100 may generate comparative value information by comparing pieces of measured value information having the same frequency. As an example, the comparative value information may be generated based on a difference value between measured value information at a specific point in time and measured value information at another point in time. As another example, the comparative value information may be generated based on analysis of the correlation between measured value information over a specific time interval and measured value information over another time interval, frequency shift, or the like.

The comparative value information generation unit 150 may generate comparative value information by comparing measured value information at a specific point in time with all pieces of measured value information or selected pieces of measured value information having the same frequency at other points in time stored in the measured value information storage unit 270. Alternatively, the comparative value information generation unit 150 may generate comparative value information by comparing measured value information over a specific time interval with all pieces of measured value information or selected pieces of measured value information having the same frequency over other time intervals stored in the measured value information storage unit 270.

The comparative value information processing unit 230 of the database construction means 200 may match comparative value information at a specific point in time with comparative value information at another point in time compared therewith or comparative value information over a specific time interval with comparative value information over another time interval compared therewith, and may store the same in the database 260.

As an example, the comparative value information processing unit 230 of the database construction means 200 may generate a chronologically ordered multidimensional data table for the comparative value information (S450). As an example, the database construction means 200 may generate a numerical multidimensional data table with data values of the comparative value information, or may generate a visual multidimensional data table by expressing the data values of the comparative value information with various factors such as contrast, color, size, and height.

The generated multidimensional data table may be stored in the comparative value information storage unit 290.

When new comparative value information is acquired, the comparative value information processing unit 230 may continuously update the database 260 to construct a database for the comparative value information (S460). For example, when new comparative value information is acquired over time, the comparative value information processing unit 230 may continuously update the multidimensional data table to construct a database for the comparative value information (S460).

Although generating comparative value information through comparison in measured value information immediately after generating the measured value information has been described in this embodiment, generating the measured value information and generating the comparative value information may be independently performed. For example, while constructing a database by continuously adding measured value information over time, comparative value information may be generated by extracting the measured value information stored in the database periodically or in response to a control signal independent of the measured value information generation process.

Furthermore, when comparative value information is generated, a multidimensional data table may be generated by immediately reflecting the same, or a multidimensional data table for the comparative value information may be generated periodically or selectively after constructing the database for the comparative value information.

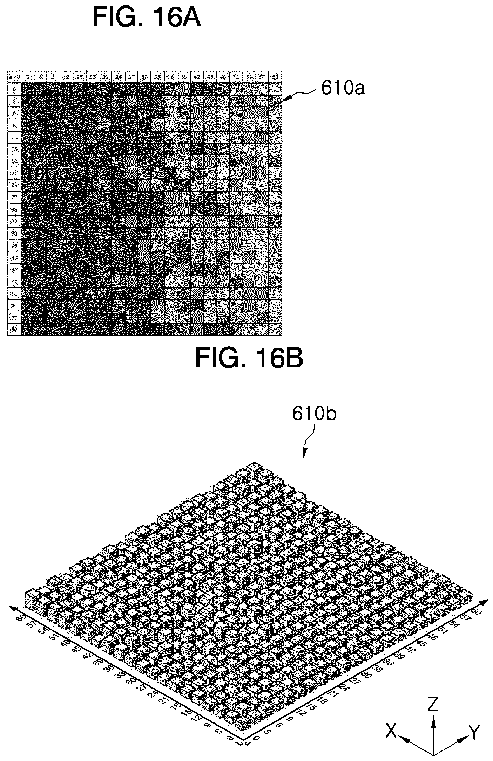

Here, the database construction means 200 may generate a numerical multidimensional data table with data values of the comparative value information, or may generate a visual multidimensional data table by expressing the data values of the comparative value information with various factors such as contrast, color, size, and height. With regard to the multidimensional data table for the comparative value information, FIGs. 16 to 21 visually express various situation-specific multidimensional data tables generated through the database construction process of the space monitoring method according to the present disclosure.

Although the multidimensional data tables in the accompanying drawings are expressed in black and white for patent application reasons, the inventor has actually implemented the multidimensional data tables in color, and the following description will therefore be based on the multidimensional data tables implemented in color.

In FIGs. 16 to 21, value a of the Y-axis indicates a temporal difference, in seconds, between a specific point in time or a specific time interval and the current point in time. Meanwhile, value b of the X-axis is a value relative to value a, indicating a temporal difference, in seconds, between a specific point in time or a specific time interval, denoted by a, and another point in time or another time interval compared therewith. In other words, in FIGs. 16 to 21, measured value information measured a seconds before the current point in time is compared with measured value information measured (a+b) seconds before the current point in time to generate comparative value information, and values of the comparative value information are shown as a color or bar height in coordinates where the Y-axis value is a and the C-axis value is b.

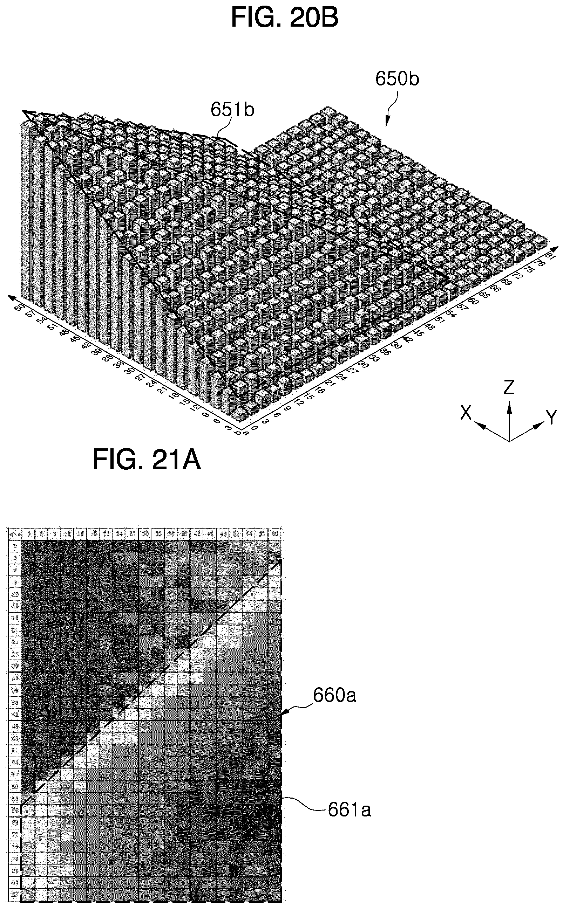

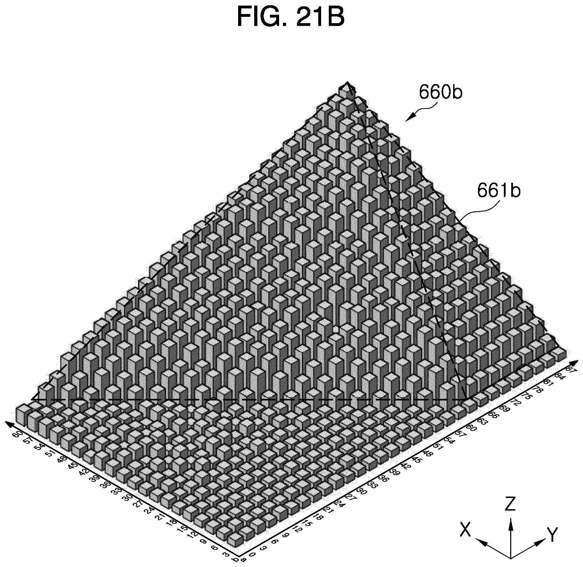

When the comparative value information is expressed using color elements, RGB colors may be applied in a multistep manner in consideration of the size and interval of the maximum and minimum values of the comparative value information. For example, in FIG. 16 to (a) of FIG. 21, the value of the comparative value information increases as the color in the dark red series increases, and the value of the comparative value information decreases as the color in the dark green series increases. That is, the redder the color, the more two pieces of measured value information differ, and the darker the green color, the less two pieces of measured value information differ.

As another example, when the comparative value information is expressed using the height of the bar, the height of the bar may be set in consideration of the size and interval of the maximum and minimum values of the comparative value information. In FIG. 16 to (b) of FIG. 21, the higher the height of the bar, the larger the numerical value of comparative value information, i.e., the difference between two pieces of measured value information compared with each other is great.

Here, the amount of frequency shift may be applied to the comparative value information in addition to the difference between measured values.

Furthermore, in FIGs. 16 to 21, the comparative value information is expressed as colors or bar heights of positive sizes, but the comparative value information may also be expressed as various factors, such as contrast, and bar heights of positive and negative sizes. Also, in FIG. 16 to (b) of FIG. 21, the form of a bar in which each piece of comparative value information has an individual height is used, but a three-dimensional curved surface connecting the heights of respective pieces of comparative value information may also be used.

Hereinafter, an example of data analysis for each of the multidimensional data tables shown in FIGs. 16 to 21 will be described.

Multidimensional data tables 610a and 610b for the comparative value information shown in FIG. 16 are for the case in which the stable state of the target space is maintained, whereby no significant changes in the measured value information occur. Because measured value information at each point in time is similar within a predetermined level, each piece of comparative value information has a value equal to or less than a predetermined value.

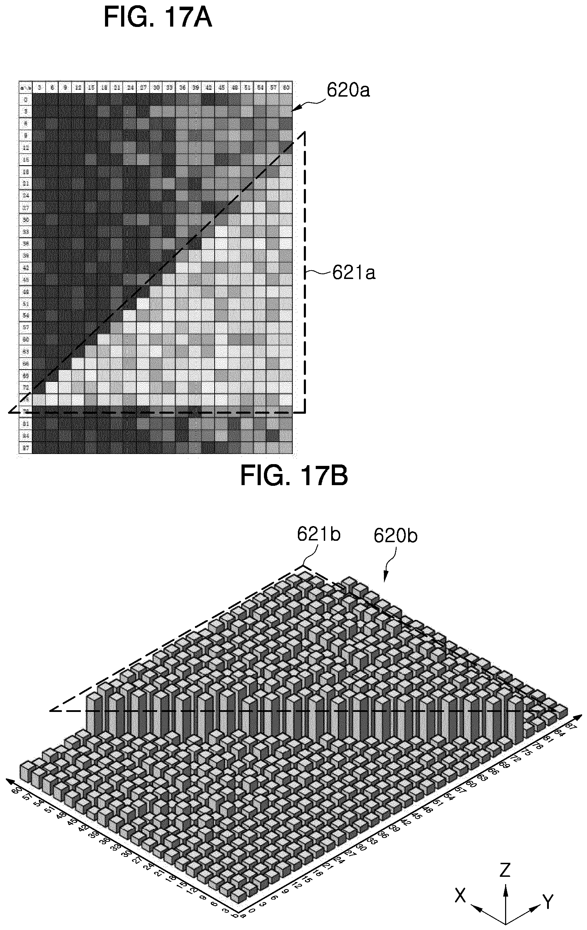

Multidimensional data tables 620a and 620b for the comparative value information shown in FIG. 17 are for the case in which a specific change occurs at a point in time 75 seconds before the current point in time, i.e., at a point in time where the value of a is 75 seconds, and then the state continues without further change. For example, the state is maintained after a window is opened in the target space, or the state is maintained after the arrangement of furniture in the target space is changed. Because the state is maintained after a change in the situation of the target space, a significant color change region 621a or a height change region 621b has a triangular shape, compared to the normal state.

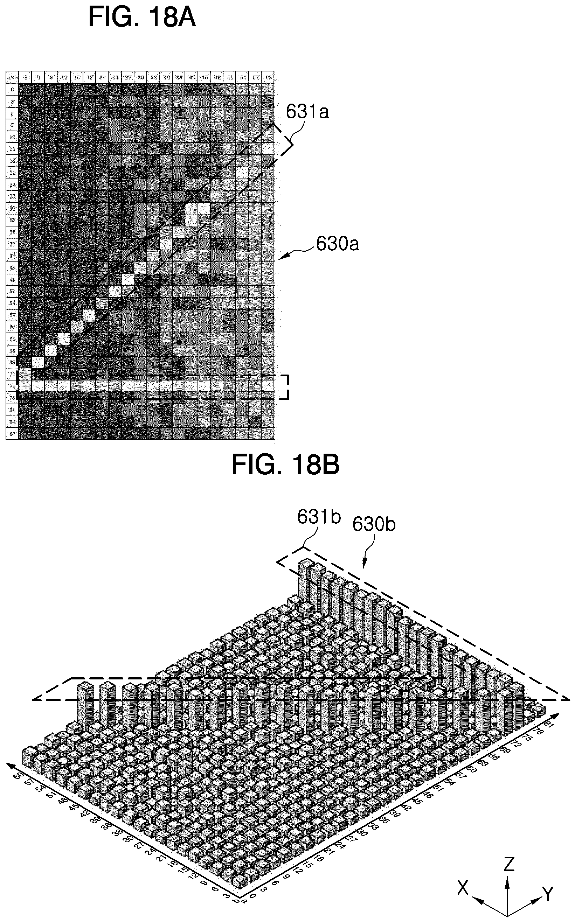

Multidimensional data tables 630a and 630b for the comparative value information shown in FIG. 18 are for the case in which a temporary change occurs at a point in time before 75 seconds and then the original state is restored and maintained. For example, an intruder enters the target space and then immediately exits again, or a window is opened and then immediately closed again. As a result of such a space situation change affecting the comparative value information, data tables 630a and 630b in which a significant color change region 631a or a height change region 631b have specific shape and area patterns corresponding to the situation are generated.

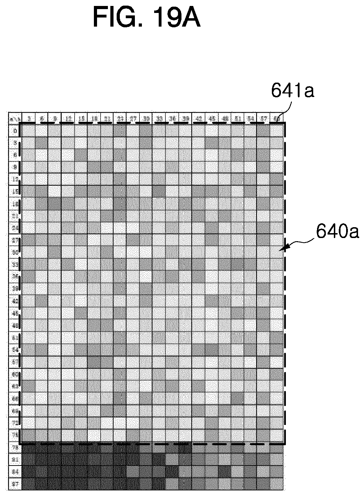

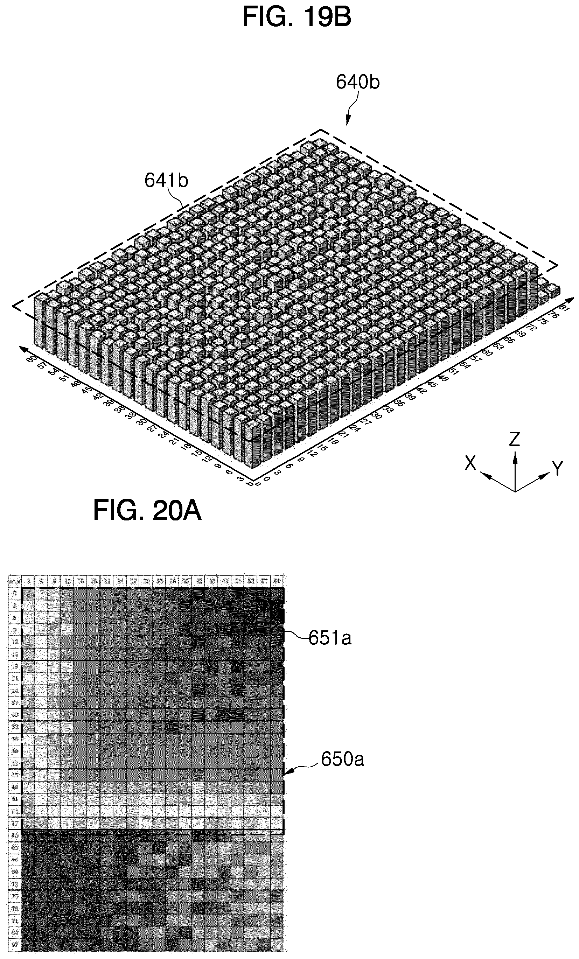

Multidimensional data tables 640a and 640b for the comparative value information shown in FIG. 19 are for the case in which a significant change has occurred at a point in time before 75 seconds (the value of a being 75) and the change continues to the present. For example, an intruder enters the target space, and the intruder is moving in the target space to the present. As a result of such a space situation change affecting the comparative value information, data tables 640a and 640b in which a significant color change region 641a or a height change region 641b have specific shape and area patterns corresponding to the situation are generated.

Multidimensional data tables 650a and 650b for the comparative value information shown in FIG. 20 are for the case in which there has been a gradual, directional change from a point in time 57 seconds before the present. For example, a fire has occurred in the target space. At the beginning of the fire, the temperature change is minimal, resulting in a small amount of change, but as the fire progresses, the temperature gradually increases and the comparative value is continuously expanded. As the temperature of the target space gradually increases, data tables 650a and 650b having a distinctive pattern in which a color change region 651a or a height change region 651b is gradually intensified are generated.

Multidimensional data tables 660a and 660b for the comparative value information shown in FIG. 21 are for the case in which a significant change has gradually occurred from a past point in time and then the change factor has dissipated at a point in time 63 seconds before the present, gradually returning to a normal state. For example, a fire had occurred in the target space a long time ago, and the fire was extinguished at a point in time 63 seconds before the present. As the temperature of the target space gradually decreases, data tables 660a and 660b having a distinctive pattern in which a color change region 661a or a height change region 661b is gradually weakened are generated.

As such, in the present disclosure, it is possible to construct a database of comparative value information as a multidimensional data table by matching comparative value information, acquired through comparison between measured value information at a specific point in time or over a specific time interval and measured value information at another point in time or over another time interval, with the point in time or the time interval.

Furthermore, as will be described later, as a multidimensional data table for such comparative value information is provided to the administrator or the user in the form of visual information, the administrator or the user may immediately recognize the situation occurring in the target space. That is, an ordinary administrator or user who is not a skilled engineer has difficulty interpreting data constituted by complex numerical values or text. However, in the present disclosure, data may be provided to the user in a visual representation, such as color or height, and since the visual information is displayed in a unique pattern depending on the situation of the space to be monitored, an ordinary manager or user who is not a skilled engineer may easily and quickly grasp the situation occurring in the target space.

Furthermore, according to the present disclosure, a reference table having a typical pattern representative of a specific situation may be provided to the administrator or the user. The administrator or the user may infer the current situation of the target space based on the visual pattern of the multidimensional table. At this time, it is possible to more easily and accurately infer the current situation by comparing the visual pattern of the reference table expressing the typical situation with the current visual pattern. For example, if the visual pattern of the data table expressing the situation of the target space appears in a form similar to FIG. 18, the user may infer that a temporary change occurred in the target space and was restored immediately. The administrator may learn the typical visual pattern of the reference table representative of the specific situation in advance, or may learn what each unique visual three-dimensional pattern indicates when management experience is accumulated.

In addition, conventionally, a method of comparing the currently measured information with specific reference value information is used, and therefore it is necessary to set appropriate reference value information in advance. In the present disclosure, however, information measured at the present and in the past is compared with each other, and therefore it is unnecessary to set the reference value information and it is possible to grasp the situation of the space more accurately than when the reference value information is set.

Meanwhile, since information measured whenever a received acoustic signal is sampled is stored or the information is stored in the form of a frequency response curve for each specific time interval, measured value information has a large amount of data to be stored. However, comparative value information acquired through comparison between pieces of measured value information has a significantly reduced amount of data, compared with the measured value information. Therefore, in the present disclosure, it is possible to dramatically reduce the amount of stored data by storing comparative value information, which enables long-term storage.

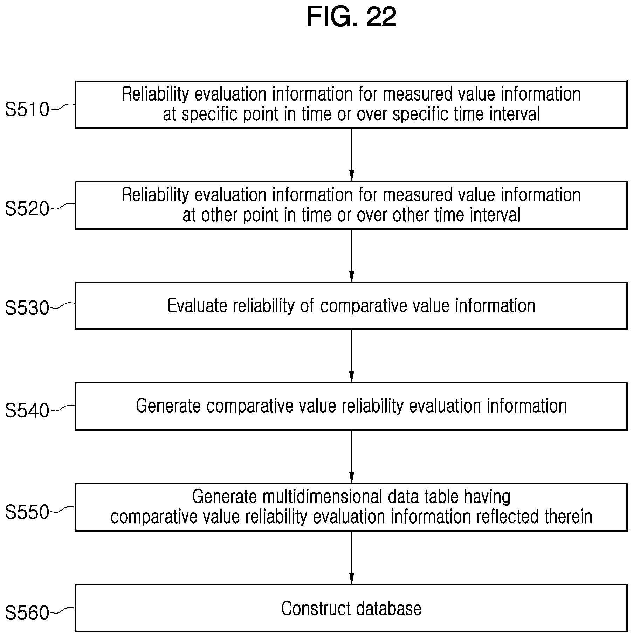

Also, in the present disclosure, situation determination reliability may be secured by adding the comparative value reliability evaluation information to each piece of comparative value information in the multidimensional data table of the comparative value information. In this regard, FIG. 22 is a flowchart of a further embodiment of the database construction process of the space monitoring method according to the present disclosure.

The information generation means 100 may evaluate the reliability of measured value information at a specific point in time or over a specific time interval to acquire measured value reliability evaluation information (S510).

The information generation means 100 may extract measured value information at another point in time or over another time interval that is stored, and may also extract measured value reliability evaluation information for the measured value information (S520).

The information generation means 100 may generate the comparative value information by comparing measured value information at a specific point in time with measured value information at another point in time or measured value information over a specific time interval with measured value information over another time interval, and may evaluate the reliability of the comparative value information based on the measured value reliability evaluation information for the measured value information at the specific point in time or over the specific time interval and the measured value reliability evaluation information for the measured value information at the other point in time or over the other time interval (S530) to generate comparative value reliability evaluation information (S540) .

As an example, measured value reliability evaluation information for measured value information at a specific point in time or over a specific time interval may be compared with measured value reliability evaluation information for measured value information at another point in time or over another time interval, and the minimum value of each piece of measured value reliability evaluation information or the multiplication value of pieces of measured value reliability evaluation information may be determined as reliability evaluation information of the comparative value information.

The database construction means 200 may generate a higher-dimensional multidimensional data table by reflecting the comparative value reliability evaluation information in the multidimensional data table for the comparative value information (S550), and may store the same.

When new comparative value information is acquired over time, the database construction means 200 may update the multidimensional data table by immediately reflecting the comparative value reliability evaluation information therefor or may repeatedly perform the process of generating the comparative value information and the comparative value reliability evaluation information to construct the database and may extract the comparative value information and the comparative value reliability evaluation information to generate a multidimensional data table.

Here, the database construction means 200 may generate a numerical multidimensional data table with data values of the comparative value information and the comparative value reliability evaluation information, or may generate a visual multidimensional data table by expressing the data values of the comparative value information and the comparative value reliability evaluation information with various factors such as contrast, color, size, and height.

The database construction means 200 may construct a database through the above process (S560).

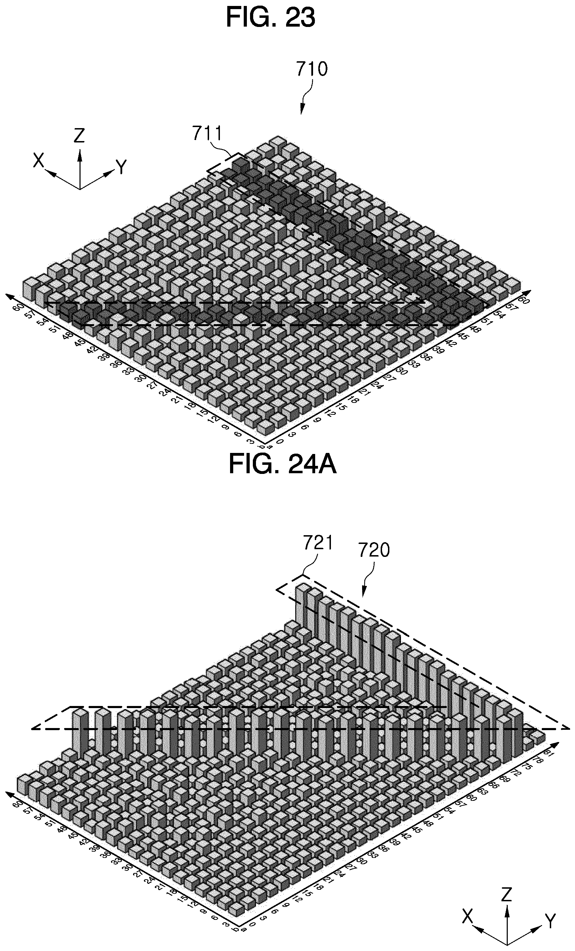

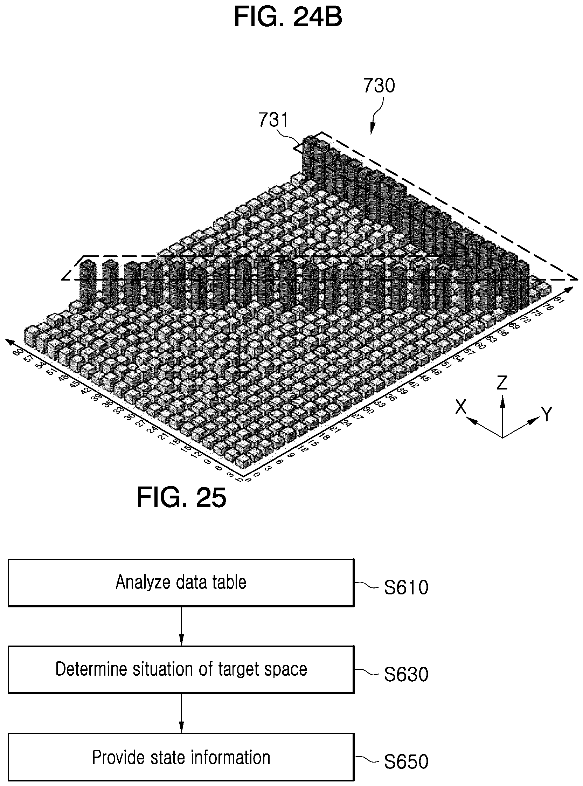

FIGs. 23 and 24 show an example of a visual representation of a multidimensional data table generated by reflecting comparative value reliability evaluation information through the database construction process of the space monitoring method according to the present disclosure.

FIG. 23 shows the case in which the comparative value reliability evaluation information is reflected in the multidimensional data table for the comparative value information of FIG. 16 described above. That is, the reliability evaluation is performed for each piece of comparative value information and the comparative value reliability evaluation information is reflected in the comparative value information to generate a higher-dimensional data table.

For example, if the reliability evaluation for measured value information at a point where the value of a is 48 and a point where the value of a is 51 is significantly low, the reliability evaluation of comparative value information acquired by comparing the two pieces of measured value information with each other may be significantly low, even though the reliability evaluation for measured value information at another point in time or over another time interval compared therewith is high.

By reflecting the comparative value reliability evaluation information for the comparative value information using various factors such as color and contrast, it is possible to visually express a multidimensional data table having a higher dimension than the multidimensional data table for comparative value information.

In FIG. 23, a comparative value information region having a significantly low reliability evaluation is displayed in a data table 710 with a dark contrast, whereby a comparative value region 711 having a low reliability may be easily recognized.

In some circumstances, each of the reliability evaluation factors for the measured value described above may be individually reflected, whereby the dimensionality of the multidimensional data table for comparative value information may be further increased by the number of reliability evaluation factors that are reflected.

FIG. 24 shows the case in which the comparative value reliability evaluation information is reflected in the multidimensional data table for the comparative value information of FIG. 18 described above while being displayed in contrast.

In FIG. 18, a change pattern of a significant height change region 631b having a regular shape compared with a normal state is present in the multidimensional data table 630b for the comparative value information, which case has been described as being determined, for example, as a situation in which an intruder entered and then immediately went out.

In (a) of FIG. 24, a change pattern region 721 having the same height change as in FIG. 18 is present in the data table 720. However, since there are no dark colored regions in the data table, it may be determined that the data table is considerably reliable. Therefore, it may be determined, for example, that an intruder entered and then immediately went out.

However, in (b) of FIG. 24, a change pattern region 731 having the same height change as in FIG. 18 is present in the data table 730, but comparative value reliability evaluation information of the change pattern region 731 appears as a dark contrast, and therefore it can be seen that the reliability of the comparative value information for this part is low. That is, in this case, it cannot be rashly determined that an intruder entered and then immediately went out.

On the other hand, in FIG. 23, the height change of the graph is the same as in FIG. 16, but there is a dark colored region where the comparative value information is not reliable. In this case, therefore, it cannot be rashly determined that there is no change in the space to be monitored. In other words, it cannot be ruled out that an intruder entered and then immediately went out, as in FIG. 24(a), and perhaps even in FIG. 23.

FIG. 25 is a flowchart of an embodiment of the space situation determination process according to the present disclosure.

The space situation determination means 300 may analyze a multidimensional data table (S610) to determine whether various event situations, such as intrusion and fire, have occurred in the space to be monitored (S630). If an event situation occurs, the space situation determination means may provide state information about an emergency situation in the target space to an administrator, a user, the police, a fire station, a security guard company, etc. (S650). Furthermore, the space situation determination means 300 may provide a multidimensional data table along with the state information of the space situation to the user or the administrator (S650).

As an example, when the database construction means 200 stores a numerical multidimensional data table, the space situation determination means 300 may analyze numerical data of the multidimensional data table to determine the occurrence of an event situation, may convert the numerical multidimensional data table into a visual multidimensional data table by expressing the numerical multidimensional data table with various factors such as contrast, color, size, and height, and may provide state information including the visual multidimensional data table.

As an example, when the database construction means 200 stores a visual multidimensional data table, the space situation determination means 300 may determine the occurrence of an event situation by analyzing a change pattern of the shape or the color of the multidimensional data table, and may provide state information including the visual multidimensional data table.

Furthermore, the space situation determination means 300 may provide a multidimensional data table visually expressing a reference situation corresponding to each situation along with a multidimensional data table visually expressing the current situation.

As such, in the present disclosure, the multidimensional data table for the comparative value information is generated and provided in a visual form, and therefore the situation of the target space may be easily and quickly determined even without a skilled expert.

Meanwhile, since the comparative value information contains less data than the measured value information but contains relatively less information, reliability is not guaranteed when the situation of the target space is determined using only the comparative value information. In the present disclosure, however, since the comparative value information and the comparative value reliability evaluation information are stored in a state of being matched with each other, it is possible to reduce the amount of stored data while ensuring the reliability of the situation determination results.

The above description is merely an exemplary description of the technical ideas of the present disclosure, and a person having ordinary skill in the art to which the present disclosure pertains will be able to make various modifications and variations without departing from the essential features of the present disclosure. Therefore, the embodiments of the present disclosure are intended to illustrate, not to limit, the technical ideas of the present disclosure, and the technical ideas of the present disclosure are not limited by the embodiments. The scope of protection of the present disclosure shall be construed in accordance with the following claims, and all technical ideas within the scope thereof shall be construed as falling within the scope of right of the present disclosure.

## Claims

1. A space monitoring method comprising:
a measured value information generation step of generating measured value information about a frequency response of a space measured at a specific point in time or over a specific time interval; and
a measured value information storage step of storing the measured value information in a database in a state of being matched with the specific point in time or the specific time interval, wherein
the measured value information generation step and the measured value information storage step are repeatedly performed over time to construct the database.

2. The space monitoring method according to claim 1, further comprising:
a measured value reliability evaluation information generation step of evaluating reliability of the measured value information to generate measured value reliability evaluation information, wherein
the measured value information storage step comprises storing the measured value information and the measured value reliability evaluation information in a state of being matched with the specific point in time or the specific time interval.

3. The space monitoring method according to claim 1, further comprising:
a comparative value information generation step of comparing the measured value information at the specific point in time or over the specific time interval with measured value information at one or more other points in time or over one or more other time intervals to generate comparative value information; and
a comparative value information storage step of storing the comparative value information in the database in a state of being matched with the specific point in time and the other points in time compared therewith or the specific time interval and the other time intervals compared therewith, wherein
the comparative value information generation step and the comparative value information storage step are repeatedly performed to construct the database.

4. The space monitoring method according to claim 2, further comprising:
a comparative value information generation step of comparing the measured value information at the specific point in time or over the specific time interval with measured value information at one or more other points in time or over one or more other time intervals to generate comparative value information;
a comparative value reliability evaluation information generation step of evaluating reliability of the comparative value information based on measured value reliability evaluation information for each piece of measured value information corresponding to the comparative value information to generate comparative value reliability evaluation information; and
a comparative value information storage step of storing the comparative value information and the comparative value reliability evaluation information in the database in a state of being matched with the specific point in time and the other points in time compared therewith or the specific time interval and the other time intervals compared therewith, wherein
the comparative value information generation step to the comparative value information storage step are repeatedly performed to construct the database.

5. The space monitoring method according to claim 4, wherein the measured value information generation step to the measured value information storage step and the comparative value information generation step to the comparative value information storage step are independently and repeatedly performed to construct the database.

6. The space monitoring method according to claim 2, wherein the measured value reliability evaluation information generation step comprises evaluating at least one of noise, measurement stability, spectral variability, and frequency resolution adequacy for the measured value information to generate measured value reliability evaluation information for the measured value information.

7. The space monitoring method according to claim 3, wherein the comparative value information storage step comprises matching the comparative value information in a coordinate table constituted by the specific point in time and the other points in time compared therewith or the specific time interval and the other time intervals compared therewith to generate a multidimensional data table and storing the multidimensional data table in the database.

8. The space monitoring method according to claim 3, further comprising a multidimensional data table storage step of matching a plurality of pieces of comparative value information in a coordinate table constituted by the specific point in time and the other points in time compared therewith or the specific time interval and the other time intervals compared therewith to generate a multidimensional data table and storing the multidimensional data table in the database.

9. The space monitoring method according to claim 4, wherein the comparative value information storage step comprises matching the comparative value information and the comparative value reliability evaluation information in a coordinate table constituted by the specific point in time and the other points in time compared therewith or the specific time interval and the other time intervals compared therewith to generate a multidimensional data table and storing the multidimensional data table in the database.

10. The space monitoring method according to claim 4, further comprising a multidimensional data table storage step of matching a plurality of pieces of comparative value information and a plurality of pieces of comparative value reliability evaluation information in a coordinate table constituted by the specific point in time and the other points in time compared therewith or the specific time interval and the other time intervals compared therewith to generate a multidimensional data table and storing the multidimensional data table in the database.

11. The space monitoring method according to claim 3, further comprising a space situation information provision step of providing a multidimensional data table generated based on the comparative value information to a user.

12. The space monitoring method according to claim 4, further comprising a space situation information provision step of providing a multidimensional data table generated based on the comparative value information and the comparative value reliability evaluation information to a user.

13. A space monitoring system comprising:
an information generation means configured to generate measured value information about a frequency response of a space measured at a specific point in time or over a specific time interval; and
a database construction means configured to organize and store the measured value information in a state of being matched with the specific point in time or the specific time interval.

14. The space monitoring system according to claim 13, wherein
the information generation means evaluates reliability of the measured value information to further generate measured value reliability evaluation information, and
the database construction means stores the measured value information and the measured value reliability evaluation information in a state of being matched with the specific point in time or the specific time interval.

15. The space monitoring system according to claim 13, wherein
the information generation means compares the measured value information at the specific point in time or over the specific time interval with measured value information at one or more other points in time or over one or more other time intervals to generate comparative value information, and
the database construction means further stores the comparative value information in a state of being matched with the specific point in time and the other points in time compared therewith or the specific time interval and the other time intervals compared therewith.

16. The space monitoring system according to claim 14, wherein
the information generation means compares the measured value information at the specific point in time or over the specific time interval with measured value information at one or more other points in time or over one or more other time intervals to further generate comparative value information and evaluates reliability of the comparative value information based on measured value reliability evaluation information for each piece of measured value information corresponding to the comparative value information to further generate comparative value reliability evaluation information, and
the database construction means further stores the comparative value information and the comparative value reliability evaluation information in a state of being matched with the specific point in time and the other points in time compared therewith or the specific time interval and the other time intervals compared therewith.

17. The space monitoring system according to claim 15, wherein the database construction means matches the comparative value information in a coordinate table constituted by the specific point in time and the other points in time compared therewith or the specific time interval and the other time intervals compared therewith to generate a multidimensional data table and stores the multidimensional data table in a database.

18. The space monitoring system according to claim 16, wherein the database construction means matches the comparative value information and the comparative value reliability evaluation information in a coordinate table constituted by the specific point in time and the other points in time compared therewith or the specific time interval and the other time intervals compared therewith to generate a multidimensional data table and stores the multidimensional data table in a database.

19. The space monitoring system according to claim 15, further comprising a space situation determination means configured to provide a multidimensional data table generated based on the comparative value information to a user.

20. The space monitoring system according to claim 16, further comprising a space situation determination means configured to provide a multidimensional data table generated based on the comparative value information and the comparative value reliability evaluation information to a user.
